# EUROPEAN PATENT SPECIFICATION

(11) **EP 4 132 700 B1**
(45) Date of publication and mention of the grant of the patent: **03.07.2024**
(21) Application number: 21717823.5
(22) Date of filing: 07.04.2021
(51) Int. Cl.: B01J 19/00, B01J 19/18, B01J 8/10, B01J 8/22, B01J 19/08, B01J 10/00, B01J 14/00, B01J 19/12, B01D 9/00

(54) **TUBULAR REACTOR WITH MIXING MEANS**
ROHRREAKTOR MIT MISCHVORRICHTUNG
RÉACTEUR TUBULAIRE COMPORTANT UN MOYEN DE MÉLANGE

(30) Priority: 08.04.2020 GB 202005191
(43) Date of publication of application: 15.02.2023
(73) Proprietor: Autichem Ltd, Warrington, Cheshire WA4 5NW (GB)
(72) Inventor: MORRIS, David, Warrington Cheshire WA4 5NW (GB)
(74) Representative: Bawden, Peter Charles
(86) International application number: PCT/EP2021/058993
(87) International publication number: WO 2021/204834

(56) References cited:
- CN-A- 110 193 333
- FR-A- 1 307 546
- GB-A- 2 545 927

## Description

The present invention relates to a continuous mixing process which may include reactions and to tubular reactors that involve the mixing of two or more phases; in particular immiscible phases. The reactors of the invention may be employed simply to produce a mixture of the phases, which may or may not be homogeneous. Alternatively in addition to the mixing of the phases a reaction between the phases may occur as the materials mix and flow through the reactor. The invention improves the interaction of the phases and provides improved mass and heat transfer between the phases leading to increased reaction and/or mixing efficiency.

Tubular reactors are well known and are reactors in which process material flows continuously along the length of the reactor. Typically agitators or stirrers are provided within the reactor along its length to enhance the mixing and perhaps reaction of the materials as they flow through the reactor. Various designs are known for the internals and the internal configuration of tubular reactors aimed at enhancing the mixing and reaction of materials.

The reactors of this invention can be used to mix and optionally react two or more phases; the phases may be liquid, gaseous or solid and/or may comprise particles and/or waves. The invention is however particularly useful to process two or more liquid phases, two or more gaseous phases or a system including at least one liquid phase and at least one gaseous phase. A solid phase may also be included but when included the solid should be in a finely divided state and/or be immobilised by adhesion to the reactor body and/or to an agitator or stirrer. When a particle and/or wave phase is included it is preferably present as a substantially regular flow of particles and/or waves which may comprise ions, electrons or photons as may be used in electrochemical or photochemical reactions.

The ideal flow condition in a tubular reactor is "plug flow". In order to obtain a uniform homogenous output from a tubular reactor it is desirable that the process fluid flows through the reactor in a manner as close to plug flow as possible as this ensures that all the reactants are subjected to substantially the same sets of conditions as they pass through the reactor. In practice, ideal (100%) plug flow does not occur as factors like wall friction between the reactor inner wall and the process material, mixing and diffusion affect the velocity profile of the process material along the reactor. The ability to maintain reasonably good plug flow, however, can have significant benefits. Where yield and/or quality of product is sensitive to reaction time, good plug flow permits precise control of residence time within the reactor. Plug flow also results in greater separation between reacted and unreacted material. This is desirable for reactions where reaction rate is affected by reactant concentration.

Flow in a manner that is as near to plug flow as possible is important in good continuous flow processes to ensure a consistent residence time of process material within the reactor and to reduce the variabilities in the product. It is however also important that the reactants are well mixed and are uniformly mixed in order to optimise the speed and yield of the particular reaction. Accordingly the ideal conditions in a continuous flow reactor are that the axial flow (in the direction of the axis of the reactor) of the reactants is or approaches plug flow whilst the flowing plug is subjected to efficient radial mixing. Although these ideal conditions may not be attainable the present invention provides a reaction system that moves the conditions in a continuous reactor nearer to this ideal situation.

Mixing is important, as it is instrumental in reactions in bringing reactants together and maintaining good energy balance and temperature control. If good plug flow conditions are to be sustained, product mixing should be limited to the mixing of materials having the same time duration in the reactor (radial mixing). The present invention relates to improvements in or relating to reactors and/or mixers and in particular to reactors through which process materials flow continuously. In particular the invention relates to the provision of dynamic mixing or agitation within reactants as they pass along the length of a reactor. The reactor with which the invention is concerned is preferably tubular, it may be single stage or multistage and the stages may be in series or in parallel. Furthermore the reactor may be horizontal, vertical, inclined or a combination thereof.

Mixing in traditional batch reactors and/or mixers is predominantly achieved by mechanically stirring the process contents. Traditionally pitched and or curved blades are employed to pump the process fluid against the vessel bottom and vertically upwards. Vertical baffles are often incorporated close to the vessel walls that push the fluid towards the centre of the vessel. The purpose of these mixing arrangements is to ensure that the entire contents of the vessel are thoroughly mixed. Such mixing methodologies do not ideally translate to continuous flow processes however, where plug flow conditions are desirable. Flow reactor systems are sometimes built using continuously stirred tank reactors (CSTRs). These typically employ batch reactor mixing methodologies and as such do not provide a true plug flow system.

Most reactions require temperature control and reactors or mixers are frequently provided with a heat transfer surface backed by a reservoir of heat transfer fluid in a heat transfer jacket.

The present invention is an improvement to the flip-flop agitator system we described in GB Patent Application 2545927A.

The invention therefore provides a process wherein a process material comprising two or more distinct phases are fed continuously to a tubular reactor containing an agitator wherein as the phases flow along the reactor the agitator displaces at least part of a first phase from its distinct position to within a second phase where it is distributed within the second phase by the agitator and the agitator is designed to allow the first phase that is distributed within the second phase to flow naturally back towards its original distinct position within the reactor as the phases pass through the reactor.

The invention further provides a reaction vessel through which process material comprising at least two phases usually liquids although a liquid can be processed in conjunction with a gas an immobilised or suspended solid flow or a flow of particles or waves such as ions, electrons or photons in a continuous manner entering the reaction vessel through an inlet and the product leaving the reaction vessel via an outlet wherein an agitator is provided inside the vessel which is capable of rotational or reciprocal movement through an arc and the agitator is shaped to capture material from a first phase to transfer the material to within a second phase where it is distributed within the second phase and subsequently allowed to pass through the agitator back to its original situation.

The invention further provides a series of agitator designs which can be utilized to improve the efficiency of specific processes. Typically these include liquid-liquid reactions, gas-liquid reactions, reactions containing suspended solids (slurries) or immobilised solids, reactions driven by the introduction of particles or waves and any combination of gases -liquids, solids and slurries or particles or waves. In a further alternative embodiment reactants in the form of particles and/or waves such as electrons, ions and photons and light waves such as ultra violet light may be introduced to the process; here this invention can overcome the problem with conventional systems that the electrons ions and photons can be retained in the surface layer of the process material.

In a preferred embodiment the reactor is a tubular reactor and the agitator comprises a probe within the tubular reactor extending substantially along the length of the reactor. In a further preferred embodiment of the invention, apertures, through holes, or slots (at least one but not limited in number) are cut or formed into the body of the agitator. These penetrations permit and encourage radial flow of the process fluid through the agitator body and provide a mixing system that is close to plug flow conditions and is scalable from small laboratory systems to much larger industrial scales. Furthermore in previous systems where process material phases are current high shear is required. This is traditionally created by pumping the process material using a high speed agitator. This often damages delicate cells, or crystals and catalytic solids however. However the present invention allows the exploitation of the natural transfer phenomena (such as buoyancy, gravity, reflection and refraction) of the dissimilar process material phases and apertures provided in the body of the agitator can provide effective shear at much lower speeds.

The sizes of the through penetrations (apertures, holes and slots) in the agitator can vary in size for example ranging from 0.0000001mm to 1,000mm. The incorporation of meshes, micro slots and perforations further enhances the closeness and concentration of the penetrations within the agitator body.

The use of these penetrations within the body of the agitator, allow gases, liquids, solids and/or particles and/or waves to pass through the agitator in the radial plane of the reactor. Where gases and liquids, or immiscible liquids are components of the process material these are broken down by the agitator into smaller conglomerations thus increasing the mass transfer and mixing between the phases.

It is preferred that the agitator has a convex and/or concave profile as is described in GB Patent Application 2545927. This shaping of the agitator enables relatively large volumes (relative to the capacity of the reactor) of each distinct phase of the process material, to be transported radially within the reactor tube from its natural situation to its unnatural situation. For example if one phase is a gas and the other phase is a liquid the natural situation of the gas would be above that of the liquid and the natural situation of the liquid would be below that of the gas. The unnatural situation of the gas would be to be within the liquid and vice versa. A second example is if one phase is a liquid and the second phase is a photon emitted from a light source. In this instance the natural position of the liquid is to occupy the entire available volume of the reactor wherein it will flow in a longitudinal direction along the length of the reactor at a rate determined by the throughput. On leaving the source photons travel in waves directed at the reactor. The Stark-Einstein or photoequivalence law and the Bunsen-Roscoe law will typically limit the attainable position of each photon to an area within a thin film of the liquid adjacent to the point at which the photon enters the liquid.

Accordingly in this instance high conversion rates of the interaction of the photons with the liquid can be achieved by repositioning the liquid in the radial plane within the reactor to a new unnatural position as can be achieved by the present invention.

Using the apparatus of the present invention in the tipping point of the agitator rotation, natural forces (gravity, buoyancy, reflection and refraction) transport the process materials to and from their natural situation within the reactor tube. The continued movement of the agitator encourages the transportation of the process materials through the apertures, holes or slots, breaking down the process material phases into multiple smaller conglomerations and thus greatly increasing the mass transfer between the phases. Whilst with traditional mixing methodology, this is only achievable at high mixing speeds, the method of this invention achieves good mass transfer at low speed mixing, thus eliminating damage to delicate process materials, saving energy and greatly reducing the heating of the process materials which can occur with highly energetic mixing. Additionally, when the agitator is convex the convex edge of the agitator moves radially and in close proximity to the heat transfer surface of the reactor tube wall, thus creating radial turbulence across the heat transfer surface and promoting the heat transfer coefficients.

The movement of the agitator can be effectively operated by a number of different motive forces, including, but not limited to, compressed gases (e.g. air or nitrogen), electricity and hydraulics. These are used to power actuators, including hydraulic motors, electric motors, pneumatic motors and pneumatic actuators that turn the actuator in the desired action via a shaft and coupling mechanism. The agitator driveshaft can be either coupled to the actuator directly (or via a gear or a belt or a chain or a hydraulic fluid or a compressible gas) through a seal or magnetically coupled.

The sizes and shapes of the agitators used in this invention may be chosen according to the size and shape of the reactor and/or the nature of the reaction or mixing process for which the reactor is to be used. The sizes and shapes of the agitator may be varied within a tubular reactor according to the reaction or mixing that is being performed and this can increase the flexibility and use of the invention. Indeed, for some processes it is advantageous to have multiple changes of volume of process material within the tubular reactor along the length of the agitator and this may be accomplished by changing the volume within the reactor that is occupied by the agitator. Where this method is deployed, the residence time of the process material changes as the plug flow passes through the system without having to alter the feed rate. However we have established a number of preferred features for the agitator designs for example an agitator with sharp corners and also having a rectangular cross section with the surfaces changing from convex to concave in design provides particularly good mixing generating radial turbulence in the process fluid. We have also found that good mixing is achieved if the agitator occupies from 10% to 99 %, preferably 25% to 90% of the cross sectional area of the tube within which it is used.

In an alternative embodiment reactants such as catalysts and other solids may be provided within the agitator where they maybe immobilised and held captive.

In one embodiment of the invention the agitator is driven by a pneumatic motor first in the clockwise direction, then stopped and driven in the counter clockwise direction (or vice versa). This action is repeated multiple times for time periods that are determined according to the nature of the process materials and the speed at which they pass through the reactor in order to give the desired mixing effect.

In a preferred embodiment of the invention apertures which vary in sizes along the longitudinal length of the agitator are deployed to vary the residence time of the process material.

In a more preferred embodiment of the invention apertures within the body of the agitator are used to mix immiscible process materials by exploiting the natural buoyance discrepancies of the process materials.

In an additional preferred embodiment of the invention the reflection and refraction properties of the apertures and agitator body material are used to mix immiscible process materials by exploiting the natural buoyance discrepancies of the process materials and additionally exploiting the natural reflection and refraction properties of the reactor and agitator body materials.

The type of agitator drive system employed will ultimately depend on each particular process or unit operation. In most circumstances however a system wherein the speed of the agitation is between 0.001 and 100 cycles per second with the agitator travelling at speeds between 1 and 10000 rpm, will fulfil most operational needs.

In theory there are no limits to the length and diameter of the tubular reaction vessel. There are however a number of practicalities that will ultimately determine the design sizes and length to diameter ratio of each particular system. The capacity required for research and development may for example be smaller than that of reactors useful with larger reactors required for commercial operation. Other factors include but are not limited to, consideration of the kinetics of the reaction in question and other process needs, consideration of the mechanical construction in relation to operational pressure, temperature and materials of construction, consideration of the erection, operation and maintenance of the equipment and consideration of the cost of construction and installation. Tubular reactors having a tubular diameter ranging from 10mm to 5000mm may be employed. The length of the vessel is similarly constrained and in practice vessels with lengths of from 0.05 to 20 meters being preferred. Where the process and reaction kinetics necessitate much longer residence times however multiple shorter vessels may be employed in series and or in parallel to create systems that can be several km in length. In such circumstances the costs of construction and installation may be limiting factors.

The possible ratios of tube length to tube diameter are again in theory limitless and as yet we have not established any technical preference for a tube diameter to length ratio. From a cost perspective however it is most economical to fabricate the equipment using off the shelf materials and materials such as steel are often supplied in standard lengths and in a range of standard diameters. From a heat transfer perspective smaller diameter vessels are preferred as they provide the system with a greater surface to volume ratio that will consequently add or remove heat from a process more effectively than a larger diameter tube with a relatively smaller heat transfer area per unit volume of process fluid.

The residence time within the reactor for any given process can be described as the amount of time needed to complete the reaction and/or mixing to its best attainable yield using economic and sustainable methods. Each different process or unit operation in a reactor will require a different residence time. Consequently there is no one size fits all circumstances and the ideal length and diameter of the vessel will vary from process to process.

The reactor of this invention may be used for exothermic reactions or for reactions which require heating to improve reaction speed and yield. Accordingly the reactor may be provided with an external heating or cooling jacket through which a temperature control fluid can pass. In some instances the jacket may be divided up into sections to provide different heating or cooling effects along the length of the tubular reactor. In an alternative embodiment heating/cooling can additionally be applied internally by flow channels cut within the body of the agitator shaft.

For example, where highly exothermic reactions are operated the energy released is significant and it is desirable in such circumstances to remove the energy produced as efficiently and as quickly as possible. In these circumstances the ratio of heat transfer area to process volume is an important variable and long small diameter tubes are often employed. In such a reaction system the flow velocity of the process fluid and the energy exchange rate of the heat transfer system substantially are constant along the entire length of the reactor.

However, the amount of energy released from the reaction may be very different at the start of the reaction to that at the end of the reaction and the lack of control of the process flow velocity/residence time and energy exchange rate can result in a poor yield and a heterogeneous product. These problems are addressed by the present invention. For example the outside diameter of the agitator relative to the internal diameter of the tubular vessel may be adjusted, usually reduced, along the length of the reactor. Alternatively or additionally the displacement volume of the agitator can be varied along the length of the reactor. In these embodiments the relative ratio of heat transfer surface area to process volume is adjusted. We have also found that good mixing is achieved if the agitator occupies from 10% to 99 % of the cross sectional area of the tube within which it is used.

The change in agitator diameter along the length of the reactor can be either a tapered change or a step change where there is at least 1 step change but no more than 10000, typically no more than 100, step changes in diameter.

To ensure good heat transfer coefficients are maintained one or more convex mixing elements can rotate in a radial fashion in close proximity to the reactor tube heat transfer surface.

The present invention is illustrated by reference to the accompanying Figures which show various agitator designs for use in the present invention.

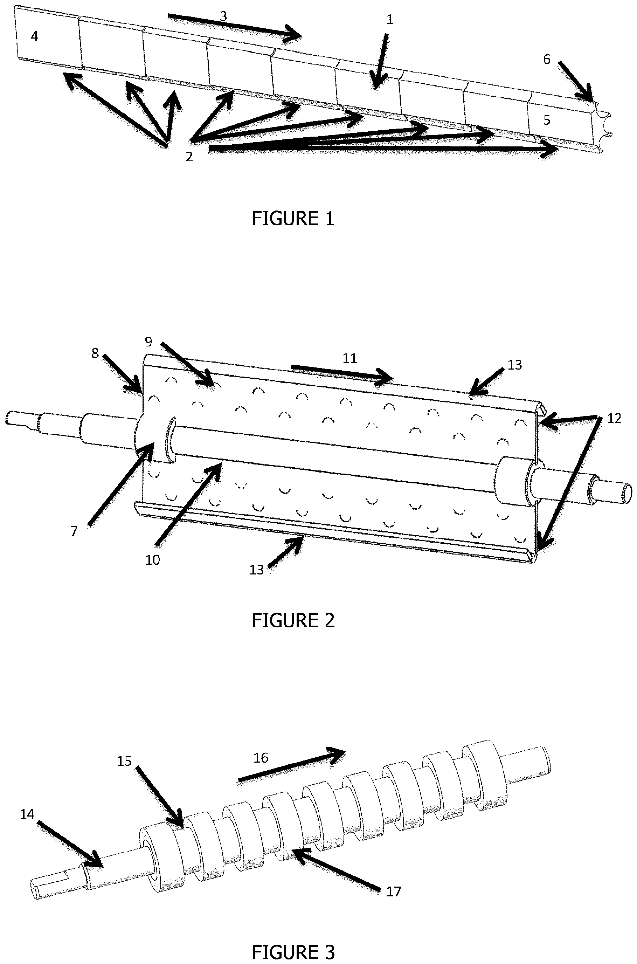

Figure 1 shows an agitator (1) wherein one or more longitudinal channels (2) are deployed to change the residence time of the process material. A process fluid can flow as indicated by arrow (3). In this way the process fluid has a short residence time in section (4) and a progressively increasing residence time as it passes along the reactor to section (5) giving control of the temperature according to the degree of reaction. Concave mixing elements (6) promote good heat transfer coefficients.

Figure 2 shows an agitator (7) with multiple mixing elements (8) wherein radial penetrations (9) and longitudinal penetrations (10) reduce the conglomeration size of the process material phases flowing in the direction of the arrow (11) while the concave profiles (12) transports the process phase material to its unnatural situation and the convex profiles (13) promote good heat transfer coefficients.

Figure 3 shows an agitator (14) with multiple radial channels (15) wherein vortices generated within the individual radial channels reduce the conglomeration size of the process material phases flowing in the direction of the arrow (16) and transport the process phase materials to their unnatural situation and the convex profiles (17) promote good heat transfer coefficients.

For some process applications this technology may be operated in part or as a whole system as a batch or loop reactor or bio-reactor. For example a flow crystallization system that filters out undersized particles and reintroduces them to the system either at the start of the reactor or part way along the reactor length. Or a bioprocessing system wherein algae is used to sequestrate carbon dioxide.

The reactors of this invention may be made from a range of materials depending on the nature of the reactants. However glass (e.g. borosilicate and silica quartz), ceramics (e.g. Zirconia and Silicon Carbide), plastics (e.g. PTFE, PFA, PVDF, Nylon and Peek), alloy steel (e.g. Alloy C276, Tantalum, Titanium and stainless steels), steel, glass lined (enamelled) steel and plastic lined steel have been found to be particularly useful.

Figures 4, 5 and 6 are schematic cross sectional illustrations through a reactor tube fitted with an agitator and showing the operation of a reactor of the present invention wherein the process material comprises a gas phase and a liquid phase.

Figure 4 shows the reactor in its starting position, the arrows (18) showing the reciprocal motion of the agitator (19) is a gas phase and (20) is a liquid phase and (21) is the agitator provided with a convex profile at its ends. In this Figure both the gas and the liquid are in their natural situations.

Figure 5 shows how as the agitator rotates it take some of the gaseous phase (22) with it into the liquid phase.

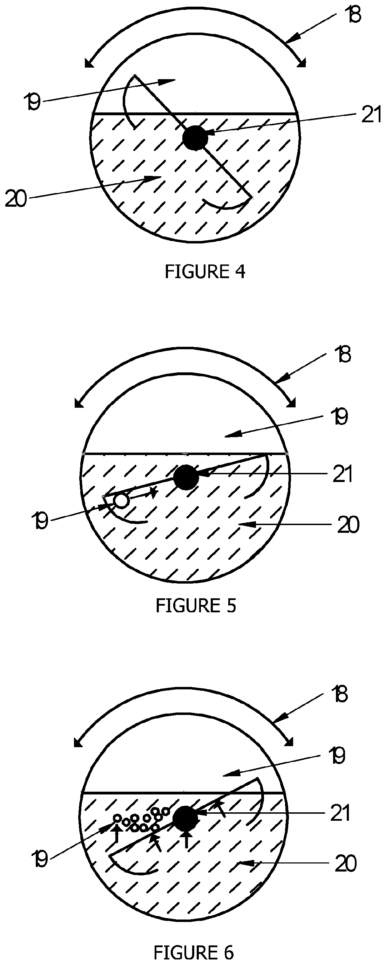

The agitator is provided with a series of small holes or penetrations (not shown) and Figure 6 shows how the element of the gaseous phase (22) is broken up by the force of the agitator and they pass back through the holes in the agitator due to the natural buoyancy and tendency to revert to their original situation.

Although this is shown just at the initial location of the reactor this mechanism will be repeated along the reactor as the process material comprising the two phases flows along the reactor thereby enabling the phases to interact and produce the desired product at the outlet of the reactor which may be a mixture of the phases or the reaction product of the phases.

## Claims

1. A process wherein a process material comprising two or more distinct phases are fed continuously to a tubular reactor containing an agitator wherein as the phases flow along the reactor the agitator displaces at least part of a first phase from its distinct position to within a second phase where it is distributed within the second phase by the agitator and the agitator is designed to allow the first phase that is distributed within the second phase to flow naturally back towards its original distinct position within the reactor as the phases pass through the reactor.

2. A process according to Claim 1 in which the agitator is horizontal.

3. A process according to Claim 1 or Claim 2 in which apertures, through holes or slots are provided in the agitator which allow gases, liquids and/or solids to pass through the agitator in the radial plane of the reactor.

4. A process according to any of the preceding claims wherein components of the phases are broken down by the agitator into smaller conglomerations thus increasing the mass transfer and mixing between the phases.

5. A process according to any of the preceding claims wherein at the tipping point of the agitator rotation, natural forces transport the phases back to their natural situation within the reactor tube.

6. A process according to Claim 5 in which the natural forces are selected from gravity and buoyancy.

7. A process according to any of the preceding claims wherein the continued movement of the agitator encourages the transportation of the process materials phases through the apertures, holes or slots, breaking down the process material phases into multiple smaller conglomerations.

8. A process according to any of the preceding claims wherein there are multiple changes of volume of process material within the tubular reactor along the length of the agitator.

9. A process according to any of the preceding claims in which the agitator is driven by a pneumatic or electric or hydraulic motor or actuator first in the clockwise direction, then stopped and driven in the counter clockwise direction (or vice versa).

10. A process according to Claim 9 in which the speed of the agitation is between 0.001 and 100 cycles per second with the agitator travelling at speeds between 1 and 10000 rpm.

11. A reaction vessel through which process material comprising at least two phases flow in a continuous manner entering through an inlet and the product leaving via an outlet wherein an agitator is provided inside the vessel which is capable of rotational or reciprocal movement through an arc and the agitator is shaped to capture material from a first phase to transfer the material to within a second phase where it is distributed within the second phase and subsequently allowed to pass through the agitator back to its original situation.

12. A reaction vessel according to Claim 11 in which the phases comprise liquids optionally in conjunction with a gas or a suspended solid.

13. A reaction vessel according to any of Claims 11 to 12 in which the agitator comprises a probe within the tubular reactor extending substantially along the length of the reactor.

14. A reaction vessel according to Claim 13 in which penetrations comprising apertures, through holes, or slots are cut or formed into the body of the agitator.

15. A reaction vessel according to Claim 14 in which the penetrations permit and encourage radial flow of the process fluid through the agitator body and provide a mixing system that is close to plug flow conditions along the vessel.

## Patentansprüche

1. Verfahren, bei dem ein Prozessmaterial, das zwei oder mehr getrennte Phasen umfasst, kontinuierlich in einen rohrförmigen Reaktor eingespeist wird, der ein Rührwerk enthält, wobei das Rührwerk, wenn die Phasen entlang des Reaktors fließen, mindestens einen Teil einer ersten Phase aus ihrer getrennten Position in eine zweite Phase verdrängt, wo sie durch das Rührwerk in der zweiten Phase verteilt wird, und das Rührwerk so ausgelegt ist, dass es der ersten Phase, die in der zweiten Phase verteilt ist, ermöglicht, auf natürliche Weise in ihre ursprüngliche getrennte Position innerhalb des Reaktors zurückzufließen, wenn die Phasen den Reaktor durchlaufen.

2. Verfahren nach Anspruch 1, bei dem das Rührwerk horizontal angeordnet ist.

3. Verfahren nach Anspruch 1 oder 2, bei dem das Rührwerk mit Öffnungen, Durchgangslöchern oder Schlitzen versehen ist, die den Durchtritt von Gasen, Flüssigkeiten und/oder Feststoffen durch das Rührwerk in der Radialebene des Reaktors ermöglichen.

4. Verfahren nach einem der vorhergehenden Ansprüche, bei dem die Bestandteile der Phasen durch das Rührwerk in kleinere Konglomerate zerlegt werden, wodurch der Stoffaustausch und die Durchmischung zwischen den Phasen erhöht werden.

5. Verfahren nach einem der vorhergehenden Ansprüche, bei dem am Kipppunkt der Rührwerksrotation die Phasen durch natürliche Kräfte in ihre natürliche Lage im Reaktorrohr zurückgeführt werden.

6. Verfahren nach Anspruch 5, wobei die Naturkräfte aus Schwerkraft und Auftrieb ausgewählt werden.

7. Verfahren nach einem der vorhergehenden Ansprüche, bei dem die fortgesetzte Bewegung des Rührwerks den Transport der Prozessmaterialphasen durch die Öffnungen, Löcher oder Schlitze fördert, wodurch die Prozessmaterialphasen in mehrere kleinere Konglomerate zerlegt werden.

8. Verfahren nach einem der vorangehenden Ansprüche, bei dem sich das Volumen des Prozessmaterials innerhalb des Rohrreaktors entlang der Länge des Rührwerks mehrfach ändert.

9. Verfahren nach einem der vorhergehenden Ansprüche, bei dem das Rührwerk durch einen pneumatischen oder elektrischen oder hydraulischen Motor oder Aktuator zunächst im Uhrzeigersinn angetrieben, dann angehalten und gegen den Uhrzeigersinn angetrieben wird (oder umgekehrt).

10. Verfahren nach Anspruch 9, bei dem die Geschwindigkeit des Rührens zwischen 0,001 und 100 Zyklen pro Sekunde liegt, wobei sich das Rührwerk mit Geschwindigkeiten zwischen 1 und 10000 U/min bewegt.

11. Reaktionsgefäß, durch das Prozessmaterial, das mindestens zwei Phasen umfasst, in kontinuierlicher Weise fließt, wobei es durch einen Einlass eintritt und das Produkt durch einen Auslass austritt, wobei ein Rührwerk im Inneren des Gefäßes vorgesehen ist, das in der Lage ist, eine Rotations- oder Hin- und Herbewegung über einen Bogen auszuführen, und das Rührwerk so geformt ist, dass es Material aus einer ersten Phase auffängt, um das Material in eine zweite Phase zu überführen, wo es in der zweiten Phase verteilt wird und anschließend durch das Rührwerk zurück in seine ursprüngliche Lage gelangen kann.

12. Reaktionsgefäß nach Anspruch 11, bei dem die Phasen Flüssigkeiten umfassen, gegebenenfalls in Verbindung mit einem Gas oder einem suspendierten Feststoff.

13. Reaktionsgefäß nach einem der Ansprüche 11 bis 12, bei dem das Rührwerk eine Sonde innerhalb des Rohrreaktors umfasst, die sich im Wesentlichen über die Länge des Reaktors erstreckt.

14. Reaktionsgefäß nach Anspruch 13, bei dem in den Körper des Rührwerks Öffnungen, Löcher oder Schlitze geschnitten oder geformt sind.

15. Reaktionsgefäß nach Anspruch 14, bei dem die Durchbrüche eine radiale Strömung des Prozessfluids durch den Rührwerkskörper ermöglichen und fördern und ein Mischsystem bereitstellen, das den Bedingungen einer Pfropfenströmung entlang des Gefäßes nahekommt.

## Revendications

1. Procédé dans lequel un matériau à traiter présentant deux ou plusieurs phases distinctes est délivré de manière continue dans un réacteur tubulaire contenant un agitateur dans lequel, lorsque les phases s'écoulent le long du réacteur, l'agitateur déplace au moins une partie d'une première phase à partir de sa position distincte vers l'intérieur d'une seconde phase dans laquelle elle est répartie à l'intérieur de la seconde phase par l'agitateur et l'agitateur est conçu de manière à permettre que la première phase qui est répartie à l'intérieur de la seconde phase revienne naturellement vers sa position distincte initiale à l'intérieur du réacteur lorsque les phases passent à travers le réacteur.

2. Procédé selon la revendication 1, dans lequel l'agitateur est horizontal.

3. Procédé selon la revendication 1 ou 2, dans lequel des ouvertures, orifices traversants ou fentes sont formés sur l'agitateur ce qui permet le passage de gaz, de liquides et/ou de solides à travers l'agitateur, dans le plan radial du réacteur.

4. Procédé selon l'une quelconque des revendications précédentes, dans lequel des composants des phases sont désagrégés par l'agitateur en conglomérations de plus faibles tailles, augmentant ainsi le transfert de masse et le mélange entre les phases.

5. Procédé selon l'une quelconque des revendications précédentes, dans lequel au point de basculement de la rotation de l'agitateur, des efforts naturels renvoient les phases dans leur situation naturelle à l'intérieur du tube de réacteur.

6. Procédé selon la revendication 5, dans lequel les efforts naturels sont sélectionnés parmi la pesanteur et la flottabilité.

7. Procédé selon l'une quelconque des revendications précédentes, dans lequel le mouvement continu de l'agitateur favorise le transport des phases de matériaux à traiter à travers les ouvertures, orifices ou fentes, désagrégeant les phases de matériau à traiter en de multiples conglomérations de plus faibles tailles.

8. Procédé selon l'une quelconque des revendications précédentes, dans lequel de multiples variations de volume de matériau à traiter se produisent à l'intérieur du réacteur tubulaire sur la longueur de l'agitateur.

9. Procédé selon l'une quelconque des revendications précédentes, dans lequel l'agitateur est entraîné par un moteur ou un actionneur pneumatique ou électrique ou hydraulique dans un premier temps dans le sens horaire, puis arrêté et entraîné dans le sens inverse (ou réciproquement).

10. Procédé selon la revendication 9, dans lequel la vitesse d'agitation est comprise entre 0,001 et 100 cycles par seconde, l'agitateur tournant à des vitesses comprises entre 1 et 10000 t/mn.

11. Cuve de réaction à travers laquelle le matériau à traiter présentant au moins deux phases s'écoule de manière continue, entrant par un orifice d'entrée et le produit sortant à travers un orifice de sortie, dans laquelle un agitateur est agencé à l'intérieur de la cuve, lequel agitateur permet d'assurer un mouvement de rotation ou alternatif sur un arc et l'agitateur est formé de manière à capturer un matériau à partir d'une première phase afin de transférer le matériau à l'intérieur d'une seconde phase dans laquelle il est distribué à l'intérieur de la seconde phase et ensuite amené à passer à travers l'agitateur de nouveau vers sa situation initiale.

12. Cuve de réaction selon la revendication 11, dans laquelle les phases comprennent des liquides, en variante, en relation avec un gaz ou un solide en suspension.

13. Cuve de réaction selon l'une quelconque des revendications 11 à 12 dans laquelle l'agitateur comprend un capteur à l'intérieur du réacteur tubulaire s'étendant sensiblement le long du réacteur.

14. Cuve de réaction selon la revendication 13, dans laquelle des éléments de pénétration comprenant des ouvertures, des orifices traversants ou des fentes sont découpés ou formés dans le corps de l'agitateur.

15. Cuve de réaction selon la revendication 14, dans laquelle les éléments de pénétration permettent et favorisent un écoulement radial du fluide à traiter à travers le corps d'agitateur et forment un dispositif de mélange qui est susceptible de bloquer les conditions d'écoulement le long de la cuve.
